# EUROPEAN PATENT SPECIFICATION

(11) **EP 2 046 595 B1**
(45) Date of publication and mention of the grant of the patent: **15.12.2010**
(21) Application number: 07787389.1
(22) Date of filing: 11.07.2007
(51) Int. Cl.: B60J 11/00

(54) **A VEHICLE PROTECTION DEVICE**
FAHRZEUGSCHUTZVORRICHTUNG
DISPOSITIF DE PROTECTION DE VÉHICULE

(30) Priority: 14.07.2006 EP 06117278
(43) Date of publication of application: 15.04.2009
(73) Proprietor: Veamo, 1000 Brussel (BE)
(72) Inventor: GEES, Wilfried, B-1000 Brussel (BE)
(74) Representative: Quintelier, Claude
(86) International application number: PCT/EP2007/057118
(87) International publication number: WO 2008/006857

(56) References cited:
- WO-A-94/25303
- WO-A-2005/039913
- GB-A- 2 177 359
- US-A1- 2005 212 322

## Description

The present invention relates to a vehicle protection device, comprising a canvas provided to be stretched over said vehicle to be protected, in order to cover at least partially said vehicle, said canvas being stored, when not in use, into a container, which comprises anchoring means provided to fix said container onto said vehicle, said canvas being provided with spacing means, provided for leaving a space between said canvas and said vehicle, when said canvas is stretched over said vehicle.

Such a vehicle protection device is known from WO 94/25303 A. A further device is known from US 2005/0212322 A1 and used to cover for example a car, a boat, a caravan or the like. In the known vehicle protection device, the canvas is stored into a container, which is fixed to the vehicle. This enables to adequately store the canvas, when not in use. In order to leave some space between the canvas and the vehicle body, spacing means are provided. The known spacing means are formed by a plurality of aligned padded strips forming an inner layer of the canvas.

A drawback of the known protection device is that the spacing means, formed by a plurality of aligned padded strips, are rather thick. This adversely affects a wounding up of the canvas, when the latter is stored in its container, as sufficient volume of the container has to be provided for storing a rather thick canvas. The thus required large container disturbs the whole aspect of the vehicle. Moreover, as there are a plurality of padded strips, they have each to be applied individually, which renders the device expensive to manufacture. Finally, the padded strips often rest on the vehicle body, when the canvas extends over the vehicle, so that there is nearly no distance between the padded strips and the vehicle body.

The object of the invention is to realise a vehicle protection device where the spacing means do not require a large container and where some distance can be created between the vehicle body and the canvas when extended over the vehicle.

A vehicle protection device according to the invention is **characterised in that** said spacing means comprise a resilient member, built-in into said canvas and provided for stretching up said canvas in such a manner as to maintain a distance between said canvas and said vehicle. The presence of the resilient member offers a favourable solution for creating a distance between the vehicle body and the canvas. As the spacing means enable to create a distance between the vehicle and the canvas, the air can circulate in the thus created space, thereby avoiding that the canvas would stick to the body of the vehicle. The fact that the resilient member is built-in into the canvas has for consequence that the canvas remains rather thin, thereby avoiding the use of a large container.

A first preferred embodiment of a vehicle protection device according to the invention is **characterised in that** said resilient member comprises a set of strips made of resilient material. The use of strips offers the advantage that they are rather thin, which is favourable for winding-up the canvas.

A second preferred embodiment of a vehicle protection device according to the invention is **characterised in that** said anchoring means are provided to removable fix said container on said vehicle. In such a manner the device can be recuperated when the vehicle is sold.

A third preferred embodiment of a vehicle protection device according to the invention is **characterised in that** said anchoring means are provided to be applied into anchoring points, provided on said vehicle for anchoring a luggage rack. In such a manner, a rigid and reliable fixing of the device on the vehicle is realised.

A fourth preferred embodiment of a vehicle protection device according to the invention is **characterised in that** said anchoring means are formed by a clamp, provided to engage with a towing hook. This embodiment offers a practical solution when the vehicle is equipped with a towing hook.

A fifth preferred embodiment of a vehicle protection device according to the invention is **characterised in that** said canvas is mounted on a spring-loaded drum. The use of a spring-loaded drum enables an easy unfolding and rolling up of the canvas.

Preferably said canvas comprises an attachment member, mounted on a front end thereof and provided to attach said front end on said vehicle. In such a manner, the canvas can be attached to the vehicle when spread over the latter.

Preferably said canvas comprises a grid of micro-perforations. The grid of micro-perforations provides an air circulation while avoiding a water infiltration through the canvas.

The vehicle protection device according to the present invention will now be exemplarily described in more detail with reference to the accompanying drawings showing preferred embodiments of the device.

In the drawings :
figure 1 shows a first embodiment of a vehicle protection device according to the invention with the canvas stored inside the container;
figure 2 shows the same first embodiment but with the canvas removed from the container;
figure 3 respectively 4 show a second embodiment of a vehicle protection device according to the invention with the canvas stored inside the container, respectively removed from the container;
figure 5 respectively 6 show the vehicle protection device with the canvas stretched over the vehicle while the device is attached to the back respectively the roof of the vehicle;
figure 7 shows a third embodiment of a vehicle protection device according to the invention;
figure 8 shows the vehicle protection device according to the invention attached to the towing hook of a vehicle;
figure 9 shows the vehicle protection device according to the invention attached to the trunk of a vehicle; and
figure 10 shows an embodiment for a hook provided to attach the canvas on the vehicle body.

In the drawings a same reference sign has been allocated to a same or analogous element.

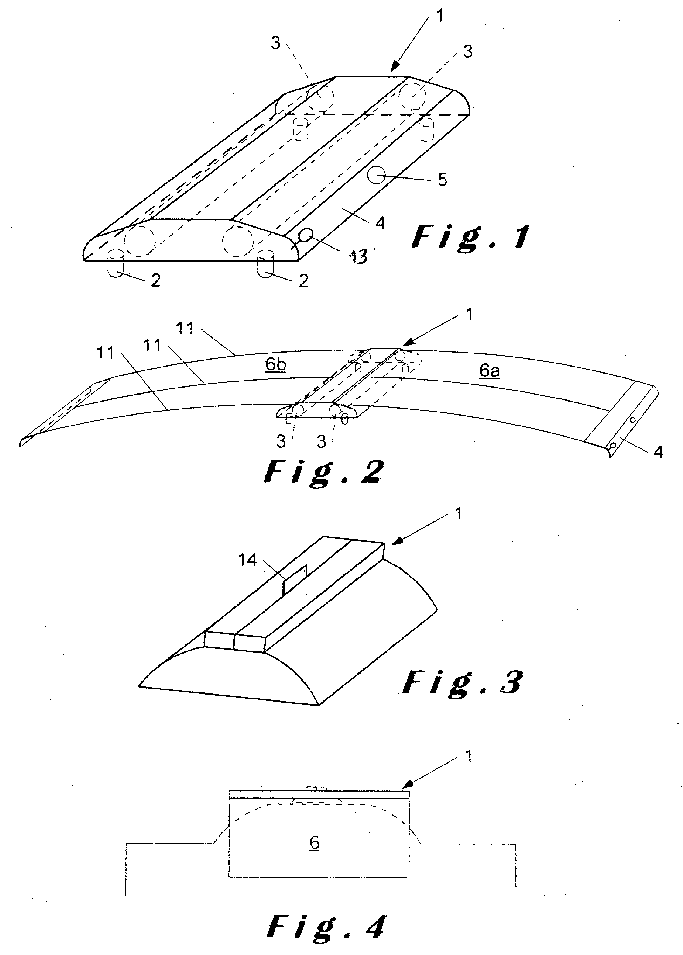

In the embodiment shown in figure 1, the vehicle protection device comprises a container 1, in which a canvas is stored. Preferably, the canvas is made of two sections, each wound up on a drum 3. When the canvas is not stretched over the vehicle, it is wound up on the drum. The drum is also stored inside the container, which is completely closed, in order to avoid that water, snow or dust would get inside it when mounted on a vehicle.

Although the drawings only show a car as vehicle, it should be noted that the present vehicle protection device can also be used on a boat, a truck, a caravan or any other vehicle.

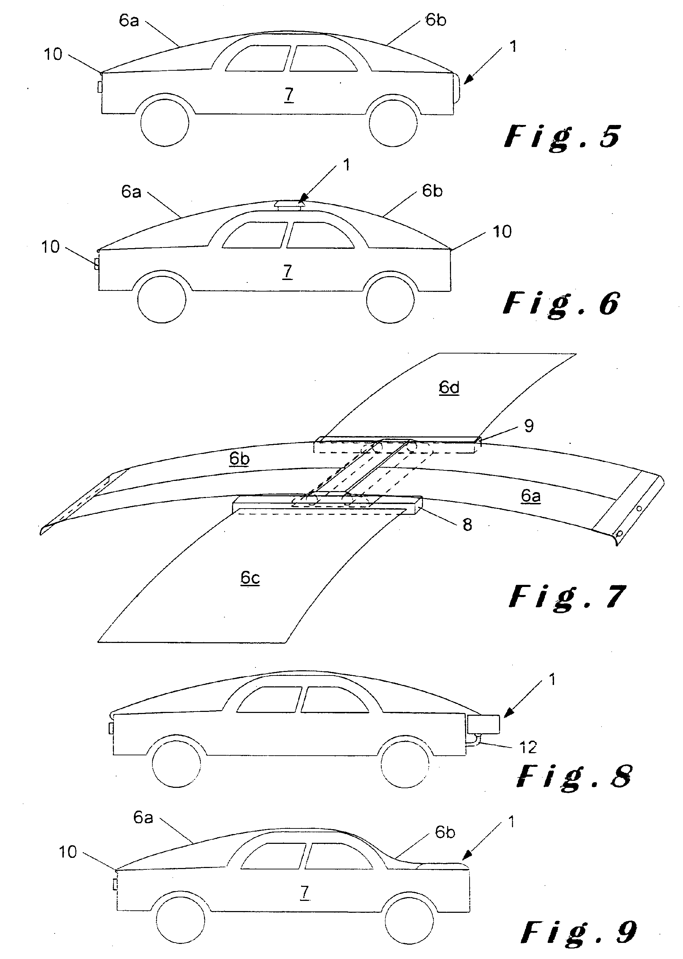

The container 1 is provided with anchoring means 2, provided to fix the container on the vehicle. !n the embodiment shown in figure 1, the anchoring means are formed by hooks or clamps, which are provided to be applied into anchoring points, provided on the vehicle for anchoring a luggage rack. Alternatively, the anchoring means could be provided with clamps provided to fix the container on the luggage rack. Other alternatives for the anchoring means are suckers or magnetic poles. The suckers or magnetic poles are provided to be placed on the roof or any other body part of the vehicle where there is a flat surface. Although it is preferred that the anchoring means are provided to removably fix the container on the vehicle, it could also be possible to fix the container permanently on the vehicle. A removable fixing however has the advantage that the user can remove the container for example, when he sells the vehicle or wants to store the device because it will not be used for a longer time. It could also be possible to integrate the device permanently into the vehicle, for example in the bumper. Alternatively, as illustrated in figure 9, the container could be removable or permanently fixed on the cover lid of the trunk. In the latter case the container is preferably clamped on this cover lid by means of clamps penetrating in the grooves between the cover lid and the remaining part of the vehicle body.

As is also illustrated in figure 1, the canvas comprises a front end 4 preferably made of a rigid material such as for example plastic. This front end is part of the cover of the container. A pulling member 5 is fixed on the front end 4 and serves to pull the canvas out of the box. It could also be possible to mount a lock 13 on the front end 4, in order to lock the container, thereby avoiding an unauthorised or unwanted use of the vehicle protection device.

As illustrated in the figures 1 and 2, the vehicle protection device according to the invention preferably comprises two canvasses, each applied on a drum 3. The drums extend substantially in parallel inside the container 1. The advantage of using two drums is that the canvas then comprises two sections 6a and 6b, as illustrated in figure 2. When the container is mounted on the roof of the vehicle 7, as illustrated in figure 6, the section 6a is stretched over the front half and section 6b over the rear half of the vehicle. In such a manner, the sections can be used separately.

In the embodiment illustrated in figure 7, the vehicle protection device according to the invention comprises four sections 6a, 6b, 6c en 6d which enable, as if to say, to envelop the vehicle. In this latter embodiment, the container 1 comprises two lateral wings 8 and 9 for storing the sections 6c and 6d.

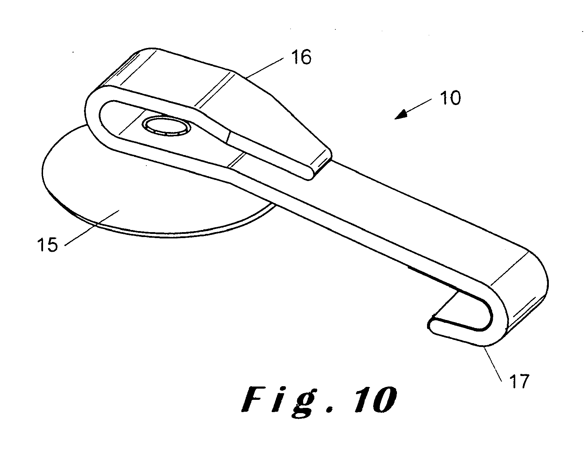

The canvas comprises preferably also an attachment member 10 mounted on a front end of the canvas and provided to attach the front end on the vehicle Figure 10 shows a preferred embodiment where such an attachment member is formed by a hook. The hook is mounted on a suction element 15, provided to be applied on the vehicle body. The hook also comprises a first curved segment 16, provided for attaching the canvas and a second curved member 17, provided for being attached to the vehicle body, such as for example the trunk hood or the like.

As illustrated in the figures 5 and 6, once the canvas is stretched over the vehicle, the attachment member 10 serves to attach the front end of the canvas to the vehicle. In such a manner it is avoided that the wind would blow the canvas away or causes the canvas to move and hit the vehicle, thereby damaging it. The attachment member is for example formed by a magnet, a sucker or a hook.

As illustrated in figure 5 or 9, the container can be mounted on the trunk and the canvas is made of a single section. In order to enable a suitable carrying of the container by the user, the container is preferably provided with a handhold 14, as illustrated in figure 3.

The canvas is preferably made of a material comprising a grid of micro-perforations. In such a manner the air can circulate through the canvas whereas water can not penetrate. The canvas is preferably made of water impermeable material.

In order to maintain the canvas, when stretched over the vehicle, at a certain distance between the vehicle body and the canvas, for example between 0,5 and 30 cm, spacing means are provided on the canvas. As illustrated in figure 2, the spacing means are formed by resilient members 11 built-in into the canvas. The resilient members are for example formed by elongated springs extending longitudinally in the canvas. In the example of figure 2, the canvas comprises a set of strips made of resilient material and applied at the lateral sides and in the middle of the canvas. The strips have a flat profile and are for example made of cold rolled steel or a synthetic material having resilient properties. The strips are built-in into the canvas, in such a manner as to be sandwiched in the material of which said canvas is made. So, for example the strips are placed in a volume created by doubling in the middle and/or folding the canvas at the lateral outer sides. In order to embed the strips into the material, different techniques, such as knitting or gluing can be used. Alternatively the spacing means could be formed by a frame onto which the canvas is mounted. The framed would then be folded up or opened when the canvas is rolled up respectively unrolled.

The figure 4 shows an embodiment of a vehicle protection device according to the present invention, where the canvas extends over the lateral sides of a car. In the latter embodiment the container is mounted on the vehicle's roof. In the embodiment shown in figure 8, the container is mounted on the towing hook 12 of the vehicle.

When the user wants to protect his vehicle with the device according to the invention, he will attach the container to the vehicle. Once attached, the canvas 6 is pulled out of the container by using the pulling member 5. The canvas can be pulled out by simply using the pulling member, which will cause the canvas 6 to unroll from the drum 3. Once the front end 4 has reached the last part to be covered, the canvas is attached by means of the attachment member 10. To roll up the canvas, the latter is first disconnected and then rolled up, thereby using the spring-loaded drums.

## Claims

1. A vehicle protection device, comprising a canvas (6a, b, c, d) and a container (1), the canvas being provided to be stretched over said vehicle (7) to be protected, in order to cover at least partially said vehicle, said canvas being stored, when not in use, into said container (1), which comprises anchoring means (2) provided to fix said container onto said vehicle, said canvas being provided with spacing means, provided for leaving a space between said canvas and said vehicle, when said canvas is stretched over said vehicle, **characterised in that** said spacing means comprises at least a resilient member (11), built-in into said canvas and provided for stretching up said canvas in such a manner as to maintain a distance between said canvas and said vehicle.

2. The vehicle protection device as claimed in claim 1, **characterised in that** said spacing means comprises a frame onto which said canvas is mounted.

3. The vehicle protection device as claimed in claim 1 or 2, **characterised in that** said spacing means comprises a set of strips made of resilient material.

4. The vehicle protection device as claimed in claim 3, **characterised in that** said strips are built-in into said canvas in such a manner as to be sandwiched in a material of which said canvas is made.

5. The vehicle protection device as claimed in any one of the claims 1 to 4, **characterised in that** said anchoring means are provided to removable fix said container on said vehicle.

6. The vehicle protection device as claimed in any one of the claims 1 to 5, **characterised in that** said anchoring means are provided to be applied into anchoring points, provided on said vehicle for anchoring a luggage rack.

7. The vehicle protection device as claimed in any one of the claims 1 to 5, **characterised in that** said anchoring means are provided to be applied on a luggage rack provided to be applied on said vehicle.

8. The vehicle protection device as claimed in any one of the claims 1 to 5, **characterised in that** said anchoring means are formed by suckers (15).

9. The vehicle protection device as claimed in any one of the claims 1 to 5, **characterised in that** said anchoring means are formed by magnetic poles.

10. The vehicle protection device as claimed in any one of the claims 1 to 5, **characterised in that** said anchoring means are formed by a clamp, provided to engage with a towing hook.

11. The vehicle protection device as claimed in any one of the claims 1 to 10, **characterised in that** said canvas is mounted on a spring-loaded drum (3).

12. The vehicle protection device as claimed in any one of the claims 1 to 11, **characterised in that** said canvas comprises an attachment member (10), mounted on a front end thereof and provided to attach said front end on said vehicle.

13. The vehicle protection device as claimed in any one of the claims 1 to 12, **characterised in that** said canvas comprises a grid of micro-perforations.

14. The vehicle protection device as claimed in any one of the claims 1 to 13, **characterised in that** said canvas is made of water impermeable material.

15. The vehicle protection device as claimed in any one of the claims 1 to 14, **characterised in that** said canvas is formed by a plurality of sections, each section being provided for covering a predetermined part of said vehicle.

## Patentansprüche

1. Fahrzeugschutzvorrichtung, eine Wagenplane (6a, b, c, d) und einen Behälter (1) umfassend, wobei die Wagenplane dafür bereitgestellt ist, über dem zu schützenden Fahrzeug (7) aufgespannt zu werden, um das Fahrzeug mindestens teilweise abzudecken, wobei die Wagenplane, wenn sie nicht in Gebrauch ist, in dem Behälter (1) aufbewahrt wird, der Verankerungsmittel (2) umfasst, die bereitgestellt sind, um den Behälter auf dem Fahrzeug zu befestigen, wobei die Wagenplane mit Beabstandungsmitteln bereitgestellt ist, die bereitgestellt sind, um zwischen der Wagenplane und dem Fahrzeug einen Abstand zu lassen, wenn die Wagenplane über dem Fahrzeug aufgespannt ist, **dadurch gekennzeichnet, dass** die Beabstandungsmittel mindestens ein elastisches Element (11) umfassen, das in die Wagenplane eingebunden ist und bereitgestellt ist, um die Wagenplane derart aufzuspannen, dass zwischen der Wagenplane und dem Fahrzeug ein Abstand bleibt.

2. Fahrzeugschutzvorrichtung nach Anspruch 1, **dadurch gekennzeichnet, dass** die Beabstandungsmittel einen Rahmen umfassen, auf welchen die Wagenplane montiert ist.

3. Fahrzeugschutzvorrichtung nach Anspruch 1 oder 2, **dadurch gekennzeichnet, dass** die Beabstandungsmittel einen Satz Streifen umfassen, die aus einem elastischen Material hergestellt sind.

4. Fahrzeugschutzvorrichtung nach Anspruch 3, **dadurch gekennzeichnet, dass** die Streifen derart in die Wagenplane eingebunden sind, dass sie in ein Material eingeschoben sind, aus dem die Wagenplane hergestellt ist.

5. Fahrzeugschutzvorrichtung nach einem der Ansprüche 1 bis 4, **dadurch gekennzeichnet, dass** die Verankerungsmittel bereitgestellt sind, um den Behälter abnehmbar am Fahrzeug zu befestigen.

6. Fahrzeugschutzvorrichtung nach einem der Ansprüche 1 bis 5, **dadurch gekennzeichnet, dass** die Verankerungsmittel bereitgestellt sind, um an Verankerungspunkten angebracht zu werden, die am Fahrzeug zum Verankern eines Dachgepäckträgers bereitgestellt sind.

7. Fahrzeugschutzvorrichtung nach einem der Ansprüche 1 bis 5, **dadurch gekennzeichnet, dass** die Verankerungsmittel bereitgestellt sind, um an einem Dachgepäckträger angebracht zu werden, der bereitgestellt ist, um am Fahrzeug angebracht zu werden.

8. Fahrzeugschutzvorrichtung nach einem der Ansprüche 1 bis 5, **dadurch gekennzeichnet, dass** die Verankerungsmittel durch Saugnäpfe (15) gebildet sind.

9. Fahrzeugschutzvorrichtung nach einem der Ansprüche 1 bis 5, **dadurch gekennzeichnet, dass** die Verankerungsmittel durch Magnetpole gebildet sind.

10. Fahrzeugschutzvorrichtung nach einem der Ansprüche 1 bis 5, **dadurch gekennzeichnet, dass** die Verankerungsmittel durch eine Klemmvorrichtung gebildet sind, die zum Einrasten an einem Abschlepphaken bereitgestellt ist.

11. Fahrzeugschutzvorrichtung nach einem der Ansprüche 1 bis 10, **dadurch gekennzeichnet, dass** die Wagenplane auf eine Federtrommel (3) montiert ist.

12. Fahrzeugschutzvorrichtung nach einem der Ansprüche 1 bis 11, **dadurch gekennzeichnet, dass** die Wagenplane ein Befestigungselement (10) umfasst, das an ihr vorderes Ende montiert ist und bereitgestellt ist, um das vordere Ende am Fahrzeug anzubringen

13. Fahrzeugschutzvorrichtung nach einem der Ansprüche 1 bis 12, **dadurch gekennzeichnet, dass** die Wagenplane ein Netz mit Mikroperforierung umfasst.

14. Fahrzeugschutzvorrichtung nach einem der Ansprüche 1 bis 13, **dadurch gekennzeichnet, dass** die Wagenplane aus einem wasserdichten Material hergestellt ist.

15. Fahrzeugschutzvorrichtung nach einem der Ansprüche 1 bis 14, **dadurch gekennzeichnet, dass** die Wagenplane aus mehreren Abschnitten gebildet ist, wobei jeder Abschnitt bereitgestellt ist, einen bestimmten Teil des Fahrzeugs abzudecken.

## Revendications

1. Dispositif de protection de véhicule, comprenant une toile (6a, b, c, d) et un contenant (1), la toile étant prévue pour être étendue au-dessus ledit véhicule (7) à protéger, afin de couvrir au moins en partie ledit véhicule, ladite toile étant stockée, quand elle n'est pas utilisée, dans ledit contenant (1), qui comprend des moyens d'ancrage (2) prévus pour fixer ledit contenant sur ledit véhicule, ladite toile étant pourvue d'un moyen d'écartement prévu pour laisser un espace entre ladite toile et ledit véhicule, quand ladite toile est étendue au-dessus dudit véhicule, **caractérisé en ce que** ledit moyen d'écartement comprend au moins un membre élastique (11) intégré dans ladite toile et prévu pour étirer ladite toile de manière à maintenir une distance entre ladite toile et ledit véhicule.

2. Dispositif de protection de véhicule tel que revendiqué dans la revendication 1, **caractérisé en ce que** ledit moyen d'écartement comprend un cadre sur lequel ladite toile est montée.

3. Dispositif de protection de véhicule tel que revendiqué dans la revendication 1 ou 2, **caractérisé en ce que** ledit moyen d'écartement comprend un ensemble de bandes faites de matériau élastique.

4. Dispositif de protection de véhicule tel que revendiqué dans la revendication 3, **caractérisé en ce que** lesdites bandes sont intégrées dans ladite toile de manière à être prises en sandwich dans une matière dont ladite toile est faite.

5. Dispositif de protection de véhicule tel que revendiqué dans l'une quelconque des revendications 1 à 4, **caractérisé en ce que** lesdits moyens d'ancrage sont prévus pour fixer de manière amovible ledit contenant sur ledit véhicule.

6. Dispositif de protection de véhicule tel que revendiqué dans l'une quelconque des revendications 1 à 5, **caractérisé en ce que** lesdits moyens d'ancrage sont prévus pour être appliqués dans des points d'ancrage prévus sur ledit véhicule pour ancrer un porte-bagages.

7. Dispositif de protection de véhicule tel que revendiqué dans l'une quelconque des revendications 1 à 5, **caractérisé en ce que** lesdits moyens d'ancrage sont prévus pour être appliqués sur un porte-bagages prévu pour être appliqué sur ledit véhicule.

8. Dispositif de protection de véhicule tel que revendiqué dans l'une quelconque des revendications 1 à 5, **caractérisé en ce que** lesdits moyens d'ancrage sont formés par des ventouses (15).

9. Dispositif de protection de véhicule tel que revendiqué dans l'une quelconque des revendications 1 à 5, **caractérisé en ce que** lesdits moyens d'ancrage sont formés par des pôles magnétiques.

10. Dispositif de protection de véhicule tel que revendiqué dans l'une quelconque des revendications 1 à 5, **caractérisé en ce que** lesdits moyens d'ancrage sont formés par une bride de serrage s'engageant sur un crochet de remorquage.

11. Dispositif de protection de véhicule tel que revendiqué dans l'une quelconque des revendications 1 à 10, **caractérisé en ce que** ladite toile est montée sur un tambour à ressort (3).

12. Dispositif de protection de véhicule tel que revendiqué dans l'une quelconque des revendications 1 à 11, **caractérisé en ce que** ladite toile comprend un membre d'attache (10) monté sur une extrémité avant de celle-ci et prévu pour attacher ladite extrémité avant sur ledit véhicule.

13. Dispositif de protection de véhicule tel que revendiqué dans l'une quelconque des revendications 1 à 12, **caractérisé en ce que** ladite toile comprend un réseau de microperforations.

14. Dispositif de protection de véhicule tel que revendiqué dans l'une quelconque des revendications 1 à 13, **caractérisé en ce que** ladite toile est faite de matière imperméable à l'eau.

15. Dispositif de protection de véhicule tel que revendiqué dans l'une quelconque des revendications 1 à 14, **caractérisé en ce que** ladite toile est formée par une pluralité de sections, chaque section étant prévue pour couvrir une partie prédéterminée dudit véhicule.
